# EUROPEAN PATENT APPLICATION

(11) **EP 4 135 293 A1**
(43) Date of publication of application: **15.02.2023**
(21) Application number: 22189332.4
(22) Date of filing: 08.08.2022
(51) Int. Cl.: H04L 45/302, H04L 45/85, H04W 40/02

(54) **ENHANCEMENT OF URSP ASSOCIATION**

(30) Priority: 12.08.2021 US 202163232291 P; 19.07.2022 US 202217868528
(71) Applicant: MediaTek Inc., Hsinchu City 30078 (TW)
(72) Inventor: HUANG-FU, Chien-Chun, Hsinchu City (TW); KU, Chia-Yu, Hsinchu City (TW); LIN, Yuan-Chieh, Hsinchu City (TW)
(74) Representative: Habermann, Hruschka & Schnabel

(57) **Abstract**

A method for UE route selection policy (URSP) rule matching enhancement is proposed. When an application is executed, the upper layer of a UE sends the application information to URSP entity for matching a URSP rule. The UE finds an RSD of the matching URSP rule, and the UE tries to reuse an existing PDU session, e.g., the association of the application with the existing PDU session have certain exceptions. In one example, regarding DNN, S-NSSAI, SSC mode, and PDU session type, the above listed parameters in the RSD can either match with stored PDU session parameters of the existing PDU session or match with PDU session parameters requested by the UE during the PDU session establishment procedure.

## Description

### CROSS REFERENCE TO RELATED APPLICATIONS

This application claims priority under 35 U.S.C. §119 from U.S. Provisional Application Number 63/232,291, entitled "Enhancement of URSP association", filed on August 12, 2021, the subject matter of which is incorporated herein by reference.

### TECHNICAL FIELD

The disclosed embodiments relate generally to wireless communication, and, more particularly, to method of UE route selection policy (URSP) enhancement in 5G new radio (NR) systems.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA, and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems (5GS).

The UE policies for 5GS include UE route selection policy (URSP) and access network discovery and selection policy (ANDSP). The UE policies can be delivered form a Policy Control Function (PCF) to UE. PCF takes care of network policies to manage network behavior. PCF gets the subscription information from Unified Data Management (UDM). PCF interfaces to both Access and Mobility Function (AMF) to manage the mobility context and Session Management Function (SMF) to manage the session contexts. PCF also plays a crucial role in providing a schema for network slicing and roaming. PCF triggers the URSP which enables the UE to determine how a certain application should be handled in the context of an existing or new Protocol Data Unit (PDU) session. The UE policies can also be pre-configured in UE. The pre-configured policy (stored in USIM or NVRAM) should be applied by UE only when UE has not received the same type of policy from the PCF.

A PDU session defines the association between the UE and the data network that provides a PDU connectivity service. Each PDU session is identified by a PDU session ID, and includes one or more QoS flows and QoS rules. When an application is executed, the upper layer sends the application information to the URSP entity for matching a URSP rule (i.e., by evaluating the traffic descriptor; TD), and use the corresponding RSD (Route Selection Descriptor) to establish a PDU session. The UE tries to reuse the existing PDU session. If the UE requested parameter_set_1 in the PDU session establishment request message, and the network in the PDU session establishment accept message provides parameter_set_2 associated (different from parameter_set_1) with the PDU session, currently the UE is not allowed to reuse this existing PDU session for RSD of parameter_set_1. However, the UE shall try to reuse the existing established PDU session. Otherwise, there may be duplicated PDU sessions (e.g., two PDU sessions with same parameter_set_2 associated with them); or the network may reject the PDU session establishment request (e.g., NW does not allow to establish two PDU sessions with same parameter_set_2 associated with them), which causes signaling overhead; or the UE may select the next RSD (e.g., with parameter_set_3) or URSP rule, which may not best fit the application.

A solution is sought.

### SUMMARY

A method for UE route selection policy (URSP) rule matching enhancement is proposed. When an application is executed, the upper layer of a UE sends the application information to URSP entity for matching a URSP rule. The UE finds an RSD of the matching URSP rule, and the UE tries to reuse an existing PDU session, e.g., the association of the application with the existing PDU session have certain exceptions. In one example, regarding DNN, S-NSSAI, SSC mode, and PDU session type, the above listed parameters in the RSD can either match with stored PDU session parameters of the existing PDU session or match with PDU session parameters requested by the UE during the PDU session establishment procedure.

In one embodiment, a UE receives a request from upper layers for protocol data unit (PDU) session information of the UE in a mobile communication network. For example, the upper layers request information of the PDU session via which to send a PDU of an application. The UE selects a URSP rule from one or more URSP rules. The traffic descriptor of the selected URSP rule matches with the application. The UE finds a route selection descriptor (RSD) from a list of RSDs of the selected URSP rule that matches an existing PDU session that has a list of requested parameters and a list of stored parameters. The UE associates the existing PDU session with the application and provides the existing PDU session information to the upper layers. Either the list of requested parameters or the list of stored parameters of the existing PDU session matches corresponding parameters of the RSD.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary 5G network supporting User Equipment (UE) route selection policy (URSP) handling with enhancement in 5G new radio (NR) systems in accordance with one novel aspect.
Figure 2 illustrates simplified block diagrams of a user equipment (UE) and a base station in accordance with embodiments of the current invention.
Figure 3 illustrates the content of a URSP rule as defined in 3GPP specification and parameters for enhanced URSP association.
Figure 4 illustrates examples of associate an existing PDU session with an application, where either the stored parameters of the existing PDU session or the parameters requested by the UE in the PDU session establishment procedure match at least one of the RSDs of a selected URSP rule.
Figure 5 illustrates a sequence flow between a UE and the network for enhanced URSP association in accordance with one novel aspect of the present invention.
Figure 6 is a flow chart of a method of enhanced URSP association in accordance with one novel aspect of the present invention.

### DETAILED DESCRIPTION

Reference will now be made in detail to some embodiments of the invention, examples of which are illustrated in the accompanying drawings.

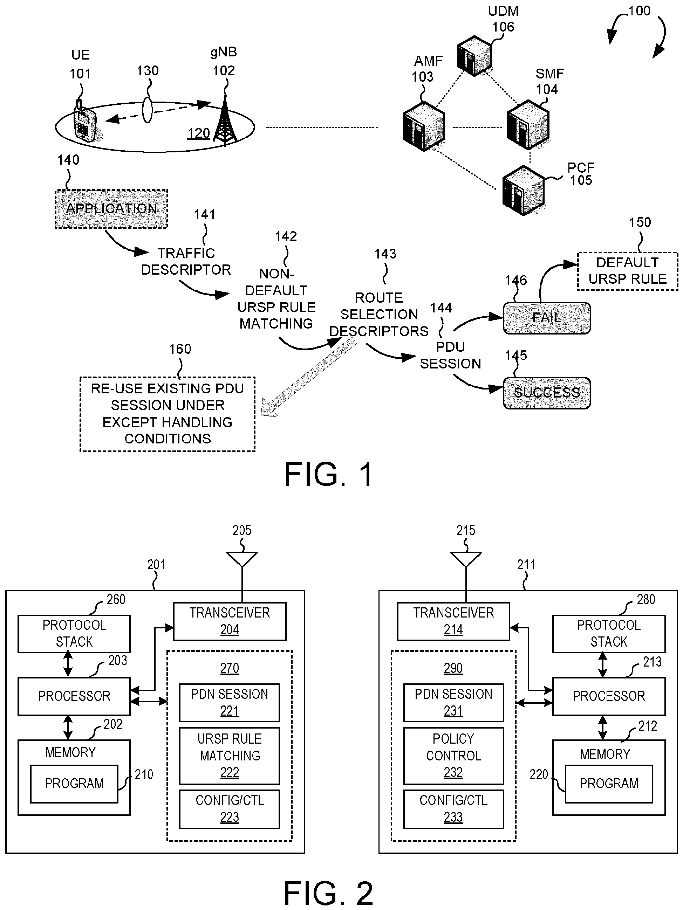

Figure 1 illustrates an exemplary 5G network 100 supporting enhanced User Equipment (UE) route selection policy (URSP) handling in 5G new radio (NR) systems in accordance with one novel aspect. 5G new radio (NR) network 100 comprises a user equipment UE 101, a base station gNB 102, an access and mobility management function (AMF) 103, a session management function (SMF) 104, a policy control function (PCF) 105, and a unified data management (UDM) 106. In the example of Figure 1, UE 101 and its serving base station gNB 102 belong to part of a radio access network RAN 120. In Access Stratum (AS) layer, RAN 120 provides radio access for UE 101 via a radio access technology (RAT). In Non-Access Stratum (NAS) layer, AMF 103 communicates with gNB 102 and 5GC for access and mobility management of wireless access devices in 5G network 100. UE 101 may be equipped with a radio frequency (RF) transceiver or multiple RF transceivers for different application services via different RATs/CNs. UE 101 may be a smart phone, a wearable device, an Internet of Things (IoT) device, and a tablet, etc.

5GS networks are packet-switched (PS) Internet Protocol (IP) networks. This means that the networks deliver all data traffic in IP packets, and provide users with Always-On IP Connectivity. When UE joins a 5GS network, a Packet Data Network (PDN) address (i.e., the one that can be used on the PDN) is assigned to the UE for its connection to the PDN. In 4G, EPS has defined a Default EPS Bearer to provide the IP Connectivity that is Always-On. In 5G, a Protocol Data Unit (PDU) session establishment procedure is a parallel procedure of a PDN connection procedure in 4G. A PDU session (e.g., 130) defines the association between the UE and the data network that provides a PDU connectivity service. Each PDU session is identified by a PDU session ID, and may include multiple QoS flows and QoS rules.

The UE policies for 5GS include UE route selection policy (URSP) and access network discovery and selection policy (ANDSP). The UE policies can be delivered form Policy Control Function (PCF) to UE. PCF takes care of network policies to manage network behavior. PCF gets the subscription information from Unified Data Management (UDM). PCF interfaces to both Access and Mobility Function (AMF) to manage the mobility context and Session Management Function (SMF) to manage the session contexts. PCF also plays a crucial role in providing a scheme for network slicing and roaming. PCF provisions the URSP which enables the UE to determine how a certain application should be handled in the context of an existing or new Protocol Data Unit (PDU) session. The UE policies can also be pre-configured in UE (USIM or NVRAM). The pre-configured policy should be applied by UE only when UE has not received the same type of policy from the PCF.

When UE 101 starts application 140, UE upper layers trigger URSP rule matching. UE 101 evaluates the URSP rules, except the default URSP rule, with a traffic descriptor matching the application information in the order of their precedence values. If UE 101 finds the traffic descriptor (141) in a non-default URSP rule (142) matching the application information, and an established PDU session matching at least one of the route selection descriptors (143) of the URSP rule, the UE then provides information on the PDU session that matches the route selection descriptor of the lowest precedence value to the upper layers. Otherwise, the UE selects a route selection descriptor with the next smallest precedence value which has not been evaluated. If no non-default matching URSP rule can be found and if UE local configuration for the application is available, UE 101 should perform the association of the application to a PDU session accordingly.

If no matching PDU session exists, the UE NAS layer should attempt to establish a PDU session 144. If the PDU session establishment is successful (145), the UE NAS layer should provide information of the successfully established PDU session to the upper layers. Otherwise, if no non-default matching URSP rule can be found and if either UE local configuration for the application is not available or the PDU session establishment based on UE local configuration for the application fails (146), UE 101 should perform the association of the application to a PDU session or to non-seamless non-3GPP offload according to the default URSP rule with the "match-all" traffic descriptor (150). If the association is unsuccessful, UE 101 informs the upper layers.

During a PDU session establishment procedure, if the UE requested parameter_set_1 in the PDU session establishment request message, and the network assigns parameter_set_2 (different from parameter_set_1) to the PDU session in the PDU session establishment accept message, currently the UE is not allowed to reuse this existing PDU session for RSD of parameter_set_1. However, UE should try to reuse an existing PDU session when the application is executed, and the upper layer sends the application information to the URSP entity for matching a URSP rule. Otherwise, there may be duplicated PDU sessions (e.g., two PDU sessions with same parameter_set_2 associated with them); or the network may reject the PDU session establishment request(e.g., NW does not allow to establish two PDU sessions with same parameter_set_2 associated with them), which causes signaling overhead; or the UE may select the next RSD (e.g., with parameter_set_3) or URSP rule, which may not be the best fit for the application.

In one novel aspect, when an application is executed, UE 101 finds an RSD of a matching URSP rule, and the association of the application with an existing PDU session should have certain exceptions (160). In general, for the existing PDU session, if RSD includes a parameter, the corresponding parameters for the existing PDU session should be the same; and if RSD doesn't include a parameter, the PDU session request message for the existing PDU session shall not include the parameter. Under the exceptions, the existing PDU session can be associated with the application even if no exact match. In one preferred embodiment, when trying to associate an existing PDU session with the application, the following PDU session is valid, e.g., if the parameter(s) in the PDU session or the parameter(s) requested by the UE in the PDU session establishment procedure match the parameter(s) in the RSD of the selected URSP rule.

Figure 2 illustrates simplified block diagrams of wireless devices, e.g., a UE 201 and network entity 211 in accordance with embodiments of the current invention. Network entity 211 may be a base station combined with an MME or AMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control functional modules and circuit 290. PDU session handling circuit 231 handles PDU session establishment and modification procedures. Policy control module 232 that configures policy rules for UE. Configuration and control circuit 233 provides different parameters to configure and control UE of related functionalities including mobility management and session management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise application layer and other upper layers to manage different applications, Non-Access-Stratum (NAS) layer to communicate with an AMF entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network. In one example, the upper layer entities request information of the PDU session via which to send a PDU of an application, system modules and circuits 270 comprise a PDU session handling circuit 221 that performs PDU session establishment and modification procedures with the network, a URSP rule matching circuit 222 that performs URSP rule matching, and a configuration and control circuit 223 that handles configuration and control parameters for mobility management and session management.

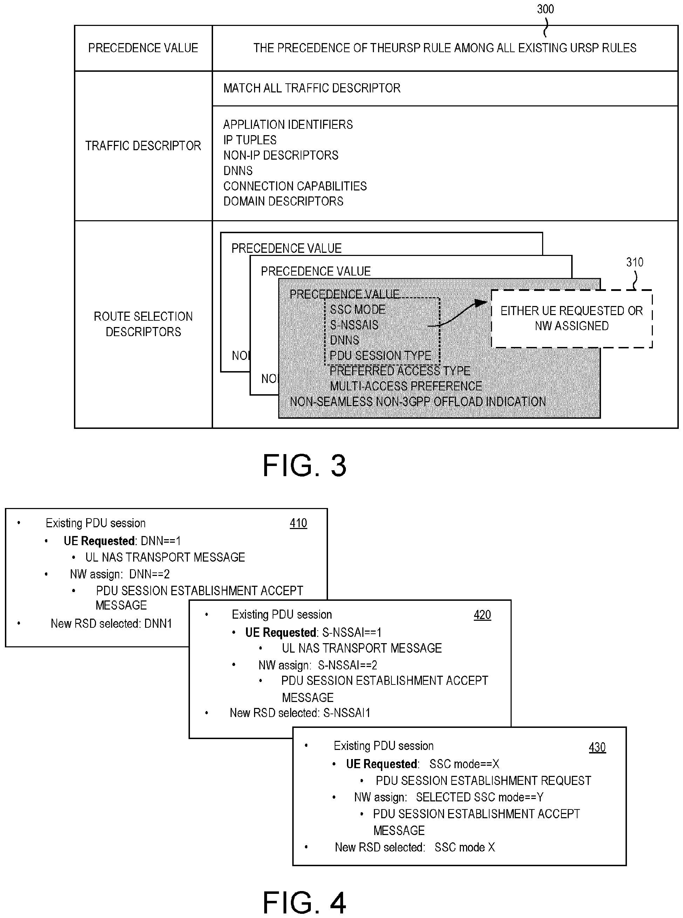

Figure 3 illustrates the content of a URSP rule as defined in 3GPP specification and parameters for enhanced URSP association. URSP is defined as a set of one or more URSP rules. As depicted by Table 300, each URSP rule is composed of: 1) a precedence value of the URSP rule identifying the precedence of the URSP rule among all the existing URSP rules; 2) a traffic descriptor; and 3) one or more route selection descriptors. The traffic descriptor includes either 1) a match-all traffic descriptor; or 2) at least one of the following components: A) one or more application identifiers; B) one or more IP 3 tuples, i.e., the destination IP address, the destination port number, and the protocol used above the IP; C) one or more non-IP descriptors, i.e., destination information of non-IP traffic; D) one or more DNNs; E) one or more connection capabilities; and F) one or more domain descriptors, i.e., destination FQDN(s). Each route selection descriptor includes a precedence value of the route selection descriptor and either 1) one PDU session type and, optionally, one or more of the followings: A) SSC mode; B) one or more S-NSSAIs; C) one or more DNNs; D) preferred access type; and E) multi-access preference; or 2) non-seamless non-3GPP offload indication. Only one URSP rule in the URSP can be a default URSP rule and the default URSP rule should contain a match-all traffic descriptor. If a default URSP rule and one or more non-default URSP rules are included in the URSP, any non-default URSP rule should have lower precedence value (i.e., higher priority) than the default URSP rule.

URSP is used by the UE to determine if a detected application can be associated to an established PDU session, can be offload to non-3GPP access outside a PDU session, or can trigger the establishment of a new PDU session. A URSP rule includes one traffic descriptor that specifies the matching criteria and one or more of the following components: SSC mode selection policy to associated the matching application with SSC mode, network slice selection policy to associated the matching application with S-NSSAI, DNN selection policy to associated the matching application with DNN, PDU session type policy to associated the matching application with a PDU session type, non-seamless offload policy to determine that the matching application should be non-seamlessly offloaded to non-3GPP access (i.e., out of a PDU session), and access type preference indicating a preferred access (3GPP or non-3GPP) when UE needs to establish a new PDU session for the matching application.

In one novel aspect, when trying to associate an existing PDU session with the application, the following PDU session is also considered valid, e.g., 1) if the parameter(s) requested by the UE in the PDU session establishment procedure match the parameter(s) in the RSD, except the preferred access type, the multi-access preference, etc.; and 2) the PDU session is established without requesting any parameter for which the matching RSD does not provide, except the preferred access type, the multi-access preference, the DNN (if one or more DNNs are included in TD, the S-NSSAI (if the UE has only one S-NSSAI in the allowed NSSAI). In one example, the list of PDU session parameters requested by the UE includes: 1) DNN; 2) S-NSSAI; 3) SSC mode, and 4) PDU session type. As depicted by 310, for the above list of parameters, an existing PDU session is considered to be a match to an RSD if either the stored PDU session parameters of the existing PDU session that are assigned by the network, or the PDU session parameters of the PDU session that are requested by the UE during the PDU session establishment procedure, match with the parameters of the RSD.

Figure 4 illustrates examples of associate an existing PDU session with an application, where either the stored (i.e., NW assigned) parameters of the existing PDU session, or the parameters requested by the UE in the PDU session establishment procedure match at least one of the RSDs of a selected URSP rule. Consider an existing PDU session and a selected RSD. In a first example (410), the requested PDU session parameter is DNN having a first value DNN==1, while the stored/assigned PDU session parameter is DNN having a second value DNN==2, so it is considered a match between the existing PDU session and the selected RSD when the DNN of the selected RSD has a value of DNN==1 or DNN==2. In a second example (420), the requested PDU session parameter is S-NSSAI having a first value S-NSSAI==1, while the stored/assigned PDU session parameter is S-NSSAI having a second value S-NSSAI==2, so it is considered a match between the existing PDU session and the selected RSD when the S-NSSAI of the selected RSD has a value of S-NSSAI==1 or S-NSSAI==2. In a third example (430), the requested PDU session parameter is SSC mode having a first value SSC mode==1, while the stored/assigned PDU session parameter is SSC mode having a second value SSC mode==2, so it is considered a match between the existing PDU session and the selected RSD when the SSC mode of the selected RSD has a value of SSC mode==1 or SSC mode==2.

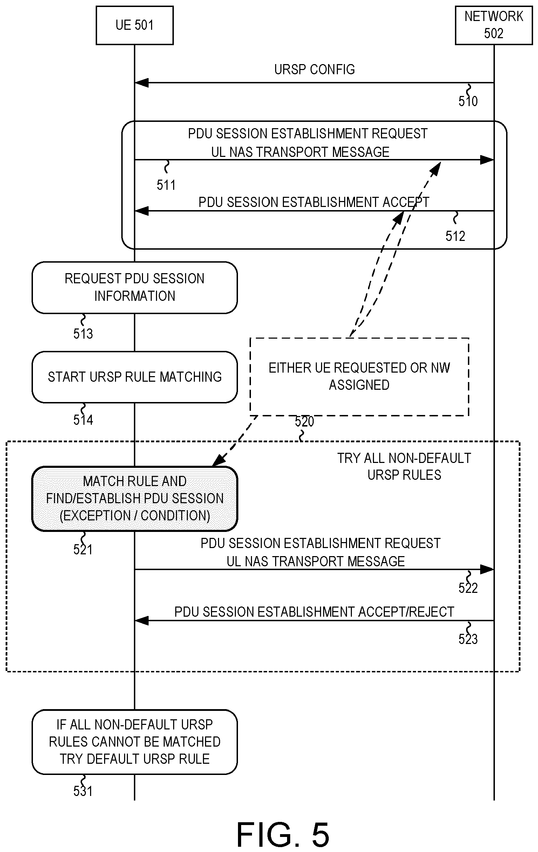

Figure 5 illustrates a sequence flow between a UE and the network for URSP rule matching in accordance with one novel aspect of the present invention. In step 510, network 502 (via PCF) provides URSP configuration or update to UE 501. URSP includes a set of URSP rules, including one default URSP rule. In steps 511 and 512, UE 501 and network 502 establish one or more PDU sessions, each PDU session comprises parameters including S-NSSAI, DNN, SSC mode, and/or PDU session ID. Note that in step 511, DNN and S-NSSAI requested during the PDU session establishment procedure are provided via an UL NAS TRANSPORT message, while SSC mode requested during the PDU session establishment procedure is provided via a PDU session establishment request message. On the other hand, the stored PDU session parameters are assigned by the network via a PDU session establishment accept message in step 512. In step 513, upper layers of UE 501 request PDU session information, e.g., triggered by starting an application. In other words, the upper layers of the UE request information of the PDU session via which to send a PDU of an application. In order to determine the association between the application and a PDU session or non-seamless non-3GPP offload, the UE upper layers proceed with the URSP rule matching in step 514.

In step 520, UE 501 tries all non-default URSP rules in an order of the precedence values. Specifically, in step 521, UE 501 selects a matching URSP rule, and then either finds existing PDU session, or establishes new PDU session, that matches at least one of the route selection descriptors of the selected URSP rule. If no matching PDU sessions exists, the UE NAS layer then attempts to establish a new PDU session. For example, in step 522, UE 501 sends a PDU session establishment request to the network. In step 523, the network sends a PDU session establishment accept to UE 501 and the PDU session is established successfully. Otherwise, the network sends a PDU session establishment reject to UE 501 and the PDU session is not established. After step 520, if all non-default URSP rules cannot be matched with the application, then in step 531, UE 501 tries the default URSP rule, which includes a match-all traffic descriptor. If the association is still unsuccessful, then UE 501 informs the upper layers of the failure.

In step 521, UE 501 tries to reuse the existing PDU session, e.g., the association of the application with the existing PDU session should be based on the matching between PDU session and RSD/URSP, but with some exceptions. Otherwise, there may be duplicated PDU sessions; or the network may reject the PDU session establishment request, which causes signaling overhead; or the UE may select the next RSD or URSP, which may not best fit the application. Specifically, if UE 501 finds the traffic descriptor in a non-default URSP rule matching the application information, and if there is one or more PDU sessions that satisfy certain conditions/exceptions, then the UE shall provide information on the PDU session that matches the route selection descriptor (RSD) of the lowest precedence value to the upper layers, even though some parameters of the PDU session do not have an exact match to the RSD of the matching URSP rule.

In one preferred embodiment, the exceptions are applicable to a list of PDU session parameters including DNN, S-NSSAI, SSC mode, and PDU session type. In general, the UE finds the traffic description matches the application if there is an exact matching between an existing PDU session and an RSD of a selected URSP rule. Under the exception, the exact matching is considered to be satisfied as long as either the PDU session parameters requested by the UE in the PDU session establishment procedure or the stored/assigned parameters of the existing PDU session match the corresponding RSD parameters of the selected URSP rule.

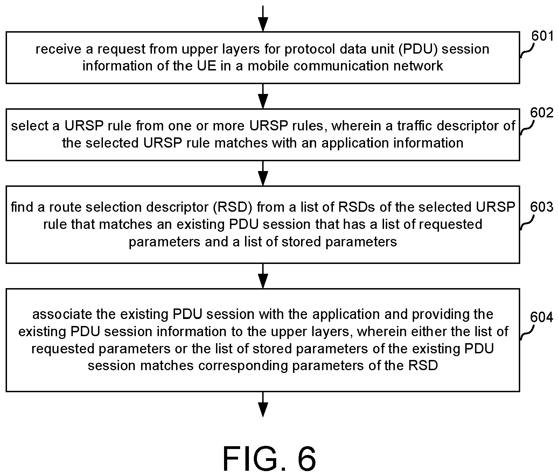

Figure 6 is a flow chart of a method of enhanced URSP rule matching with exception on PDU session type in accordance with one novel aspect of the present invention. In step 601, a UE receives a request from upper layers for protocol data unit (PDU) session information of the UE in a mobile communication network. For example, the upper layers request information of the PDU session via which to send a PDU of an application. In step 602, the UE selects a URSP rule from one or more URSP rules. The traffic descriptor of the selected URSP rule matches with the application information. In step 603, the UE finds a route selection descriptor (RSD) from a list of RSDs of the selected URSP rule that matches an existing PDU session that has a list of requested parameters and a list of stored parameters. In step 604, the UE associates the existing PDU session with the application and provides the existing PDU session information to the upper layers. Either the list of requested parameters or the list of stored parameters of the existing PDU session matches corresponding parameters of the RSD.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method of User Equipment (UE) Route Selection Policy (URSP) rule matching, comprising:
receiving a request from upper layers for protocol data unit (PDU) session information of the UE in a mobile communication network;
selecting a URSP rule from one or more URSP rules, wherein a traffic descriptor of the selected URSP rule matches with an application information;
finding a route selection descriptor (RSD) from a list of RSDs of the selected URSP rule that matches an existing PDU session, wherein the existing PDU session has a list of requested parameters and a list of stored parameters; and
associating the existing PDU session with the application and providing the existing PDU session information to the upper layers, wherein the match is determined when either the list of requested parameters or the list of stored parameters of the existing PDU session matches corresponding parameters of the RSD.

2. The method of Claim 1, wherein the list of requested or stored parameters comprises at least one of a Data Network Name (DNN), a Single-Network Slice Selection Assistance Information (S-NSSAI), and a Service and Session Continuity (SSC) mode.

3. The method of Claim 1, wherein values for the list of requested parameters are obtained during PDU session establishment from a UL NAS TRANSPORT message or a PDU SESSION ESTABLISHMENT REQUEST message.

4. The method of Claim 1, wherein values for the list of stored parameters is obtained during PDU session establishment from a PDU SESSION ESTABLISHMENT ACCEPT message.

5. The method of Claim 2, wherein the list of requested parameters comprises a first DNN1, wherein the list of stored parameters comprises a second DNN2, and wherein the RSD comprises either the first DNN1 or the second DNN2; or
wherein the list of requested parameters comprises a first S-NSSAI1, wherein the list of stored parameters comprises a second S-NSSAI2, and wherein the RSD comprises either the first S-NSSAI1 or the second S-NSSAI2; or
wherein the list of requested parameters comprises a first SSC model, wherein the list of stored parameters comprises a second SSC mode2, and wherein the RSD comprises either the first SSC model or the second SSC mode2.

6. The method of Claim 2, wherein the list of requested or stored parameters further comprises a PDU session type.

7. The method of Claim 1, wherein the list of requested parameters has values different from values of the list of stored parameters of the same PDU session.

8. A User Equipment (UE), comprising:
upper layer entities that request protocol data unit (PDU) session information, wherein the upper layer entities trigger UE Route Selection Policy (URSP) rule matching for an application;
a URSP rule matching circuit that selects a URSP rule from one or more URSP rules, wherein a traffic descriptor of the selected URSP rule matches with the application information;
a PDU session handling circuit that finds a match between a route selection descriptor (RSD) from a list of RSDs of the selected URSP rule and an existing PDU session, wherein the existing PDU session has a list of requested parameters and a list of stored parameters; and
a control circuit that associates the existing PDU session with the application and provides the existing PDU session information to the upper layers, wherein the match is determined when either the list of requested parameters or the list of stored parameters of the existing PDU session matches corresponding parameters of the RSD.

9. The UE of Claim 8, wherein the list of requested or stored parameters comprises at least one of a Data Network Name (DNN), a Single-Network Slice Selection Assistance Information (S-NSSAI), and a Service and Session Continuity (SSC) mode.

10. The UE of Claim 8, wherein values for the list of requested parameters are obtained during PDU session establishment from a UL NAS TRANSPORT message or a PDU SESSION ESTABLISHMENT REQUEST message.

11. The UE of Claim 8, wherein values for the list of stored parameters is obtained during PDU session establishment from a PDU SESSION ESTABLISHMENT ACCEPT message.

12. The UE of Claim 9, wherein the list of requested parameters comprises a first DNN1, wherein the list of stored parameters comprises a second DNN2, and wherein the RSD comprises either the first DNN1 or the second DNN2; or
wherein the list of requested parameters comprises a first S-NSSAI1, wherein the list of stored parameters comprises a second S-NSSAI2, and wherein the RSD comprises either the first S-NSSAI1 or the second S-NSSAI2; or
wherein the list of requested parameters comprises a first SSC model, wherein the list of stored parameters comprises a second SSC mode2, and wherein the RSD comprises either the first SSC model or the second SSC mode2.

13. The UE of Claim 9, wherein the list of requested or stored parameters further comprises a PDU session type.

14. The UE of Claim 8, wherein the list of requested parameters has values different from values of the list of stored parameters of the same PDU session.
